# EUROPÄISCHE PATENTSCHRIFT

(11) **EP 2 573 539 B1**
(45) Veröffentlichungstag und Bekanntmachung des Hinweises auf die Patenterteilung: **25.07.2018**
(21) Anmeldenummer: 12005693.2
(22) Anmeldetag: 04.08.2012
(51) Int. Cl.: B60W 50/02

(54) **Elektronisches Steuergerät, Fahrzeug mit einem solchen Steuergerät und Betriebsverfahren eines elektronischen Steuergeräts**
Electronic control device, vehicle with such a control device and method for operating an electronic control device
Appareil de commande électronique, véhicule doté d'un tel appareil de commande et procédé de fonctionnement d'un appareil de commande électronique

(30) Priorität: 10.09.2011 DE 102011113113
(43) Veröffentlichungstag der Anmeldung: 27.03.2013
(73) Patentinhaber: Audi AG, 85045 Ingolstadt (DE)
(72) Erfinder: Theel, Thomas, 86697 Oberhausen (DE)

(56) Entgegenhaltungen:
- US-A1- 2003 121 316

## Beschreibung

Die Erfindung betrifft ein elektronisches Steuergerät für ein Fahrzeug gemäß dem Oberbegriff des Patentanspruchs 1 sowie ein Fahrzeug gemäß dem Oberbegriff des Patentanspruchs 9 und ein Betriebsverfahren für ein elektronisches Steuergerät gemäß dem Oberbegriff des Patentanspruchs 10.

Elektronische Steuergeräte für Fahrzeuge, sowie Fahrzeuge und Betriebsverfahren für elektronische Steuergeräte sind in zahlreichen Variationen bekannt. Die elektronischen Steuergeräte werden unter anderem zum Ansteuern von sicherheitsrelevanten Fahrzeugfunktionen und somit zur Erhöhung der Sicherheit in Fahrzeugen eingesetzt. Diese Steuergeräte und die korrespondierenden Fahrzeugfunktionen sollten regelmäßig getestet werden. Auf diese Weise können Ausfälle und/oder erhöhte Risiken für die Insassen vermieden und/oder minimiert werden. Um einen Test des Steuergeräts und/oder der Fahrzeugfunktionen durchzuführen, werden häufig Fahrzeugprüfstände mit Prüfrollen eingesetzt. Zum Testen wird das Fahrzeug auf diese Prüfrollen gestellt, wobei entweder die Prüfrollen von den Rädern des Fahrzeugs angetrieben werden, oder die Prüfrollen die Räder des Fahrzeugs antreiben. Die sicherheitsrelevanten Fahrzeugfunktionen erschweren durch ihren Eingriff aufgrund der besonderen Gegebenheiten auf den Prüfrollen und den dort herrschenden Bedingungen, wie beispielsweise sich einstellende Raddrehzahlunterschiede, klinische Untersuchungen, wie beispielsweise Motor-, Getriebeversuche des Fahrzeugs. Um diese Fahrzeugtests, wie beispielsweise Verbrauchs-, Abgas- und Leistungsmessungen auf Rollenprüfständen durchführen zu können, kann beispielsweise durch Abklemmen und Ausstecken von Sensoreinheiten in die Sensorik der Fahrzeugsicherheitsfunktionen eingegriffen werden. In solchen Diagnosesituationen, die beispielsweise auch als Rollenmodus bezeichnet werden, wird üblicherweise auch ein externes Diagnosegerät eingesetzt, welches über eine Diagnoseschnittstelle mit dem Steuergerät verbunden wird.

In der Offenlegungsschrift DE 43 02 482 A1 wird ein Verfahren zur Prüfung eines Steuergeräts mit Hilfe eines externen Diagnosegeräts beschrieben. Das Diagnosegerät wird über eine serielle Schnittstelle mit dem Steuergerät verbunden. An das Steuergerät sind mindestens eine Sensoreinheit und mindestens ein Aktuator angeschlossen. Das Steuergerät weist einen Betriebsmodus und einen Diagnosemodus auf, wobei das Steuergerät im Betriebsmodus Sensordaten von der mindestens einen Sensoreinheit über mindestens eine Schnittstelle empfängt und in einer Recheneinheit auswertet und in Abhängigkeit von den ausgewerteten Sensordaten mindestens eine Fahrzeugfunktion ansteuert. Das Diagnosegerät gibt Befehle an das Steuergerät aus, wie beispielsweise eine Anforderung zum Ausgeben von ermittelten Sensordaten. Insbesondere wird der Befehl zum Ansteuern des Aktuators vom Diagnosegerät ausgegeben, wobei das Steuergerät nach Empfang des Befehls in den Diagnosemodus schaltet, in welchem die Sensordaten auf einen Fahrzeugstillstand überprüft werden. Bei bestätigtem Fahrzeugstillstand wird der Aktuator angesteuert. Wird kein Fahrzeugstillstand festgestellt verbleibt das Fahrzeug im Betriebsmodus und steuert den Aktuator nicht an.
Aus der US 2003/121316 A1 ist ein Steuergerät für ein Fahrzeug bekannt, welches eine Diagnose eines Abgassystems durchführt. Die durchgeführten Diagnosen umfassen eine Diagnose zur Erkennung von abnormalen Zustände eines Abgasrückführungssystems, eine Verschleißdiagnose eines Katalysators, eine Leckagediagnose für ein Gassäuberungssystem und eine Diagnose zur Erkennung von abnormalen Zuständen eines sekundären Luftzuführungssystems. Das Steuergerät berechnet die Durchführungshäufigkeit für jede der Diagnosen in Abhängigkeit von Sensordaten, welche das Abgassystem des Fahrzeugs betreffen.
Aus der DE 100 22 355 C2 ist ein Rollenprüfstand mit einem Prüfstandgestell mit Anfahrflächen zu drehbaren Scheitelrollen bekannt. Die Scheitelrollen treiben die Räder eines Fahrzeugs an, welches mit einem elektronischen Stabilitätsprogramm (ESP) ausgestattet ist. Der Rollenprüfstand testet ein ESP-Steuergerät durch Simulation einer Schlechtwetterstrecke und/oder von Längsdrehungen und/oder Querbeschleunigungen.
Um ein Fahrzeug sicher auf einem Rollenprüfstand testen zu können, sollten bestimmte Fahrzeugfunktionen deaktiviert und/oder eingeschränkt werden. Dies kann über einen Diagnosemodus bzw. Rollenmodus realisiert werden, bei welchem das Steuergerät eine geringere Funktionalität aufweist. Bei den beschriebenen und bekannten Steuergeräten sowie Prüfverfahren wird keine Erkennung durchgeführt, auf welche Art das Fahrzeug aktuell bewegt. So kann auf der Prüfrolle nicht zwischen Front-, Heck-, oder Allradantrieb unterschieden werden. Des Weiteren ist es möglich mit dem aktivierten Diagnosemodus und somit mit einer deaktivierten bzw. eingeschränkten Fahrzeugfunktion, insbesondere einer eingeschränkten Fahrzeugsicherheitsfunktion am Straßenverkehr teilzunehmen.

Die Aufgabe der Erfindung ist es, ein elektronisches Steuergerät für ein Fahrzeug zu schaffen, welches bei aktivem Diagnosemodus bzw. Rollenmodus verschiedene Fahrzeugzustände erkennen und in Abhängigkeit eines aktuellen Fahrzeugzustands den Diagnosemodus bzw. Rollenmodus beenden kann, sowie ein Fahrzeug mit einem solchen Steuergerät und ein zugehöriges Betriebsverfahren für ein elektronisches Steuergerät anzugeben.
Erfindungsgemäß wird die Aufgabe durch Bereitstellung eines elektronischen Steuergeräts für ein Fahrzeug mit den Merkmalen des Patentanspruchs 1, durch ein Fahrzeug mit den Merkmalen des Patentanspruchs 9 und durch ein Betriebsverfahren für ein elektronisches Steuergerät mit den Merkmalen des Patentanspruchs 10 gelöst. Vorteilhafte Ausführungsformen und Weiterbildungen der Erfindung sind in den abhängigen Ansprüchen angegeben.
Der Grundgedanke der Erfindung besteht darin, bei aktivem Diagnosemodus bzw. Rollenmodus mindestens einen Parameter fortlaufend nach vorgegebenen Kriterien zur Erkennung des aktuellen Fahrzeugzustands auszuwerten. In Abhängigkeit von der Auswertung wird dann vom Diagnosemodus bzw. Rollenmodus in den Betriebsmodus umgeschaltet, wenn der mindestens eine ausgewertete Parameter einen normalen Fahrbetrieb anzeigt bzw. für den Diagnosemodus bzw. Rollenmodus unplausibel erscheint. Ausführungsformen der Erfindung eignen sich insbesondere für allradgetriebene Fahrzeuge, aber auch einachsig angetriebene Fahrzeuge können den gleichen Nutzen aus der vorliegenden Erfindung ziehen.
Das erfindungsgemäße elektronische Steuergerät für ein Fahrzeug weist mindestens einer Schnittstelle und eine Recheneinheit auf, wobei das Steuergerät einen Betriebsmodus und einen Diagnosemodus bzw. Rollenmodus aufweist. Im Betriebsmodus und/oder im Diagnosemodus empfängt das Steuergerät über die mindestens eine Schnittstelle Sensordaten von mindestens einer Sensoreinheit und wertet die Sensordaten in der Recheneinheit aus. In Abhängigkeit der ausgewerteten Sensordaten steuert das Steuergerät mindestens eine Fahrzeugfunktion an. Im Diagnosemodus schränkt das Steuergerät mindestens eine Fahrzeugfunktion ein und empfängt Diagnoseeingabedaten zum Testen des Steuergeräts und/oder der mindestens einen Sensoreinheit und/oder der mindestens einen Fahrzeugfunktion über eine Diagnoseschnittstelle von einem externen Diagnosegerät. Über die Diagnoseschnittstelle gibt das Steuergerät angeforderte Sensordaten und/oder Diagnoseausgabedaten an das externe Diagnosegerät aus. Erfindungsgemäß wertet die Recheneinheit mindestens einen Parameter fortlaufend und nach vorgegebenen Kriterien zur Erkennung eines aktuellen Fahrzeugzustandes aus. In Abhängigkeit von der Auswertung des mindestens einen Parameters schaltet die Recheneinheit das Steuergerät vom Diagnosemodus bzw. Rollenmodus in den Betriebsmodus um, wenn der mindestens eine ausgewertete Parameter einen normalen Fahrbetrieb anzeigt und/oder für den Diagnosemodus bzw. Rollenmodus unplausibel erscheint. So kann in vorteilhafter Weise beim Anlaufen der Räder die Art der Prüfrolle über die zugeordneten Radgeschwindigkeiten ermittelt werden, unabhängig davon, ob die Rolle die Räder antreibt oder ob die Räder die Rolle antreiben. Als Reaktion deaktiviert die Recheneinheit die mindestens eine Fahrzeugfunktion, welche die Diagnose erschwert, oder schränkt die Funktionsfähigkeit ein. Dadurch kann in vorteilhafter Weise ein sicheres Stehen des Fahrzeugs auf der Rolle gewährleistet werden. Verlässt das Fahrzeug den Rollenprüfstand, ohne dass das Steuergerät vom Diagnosemodus bzw. Rollenmodus in den Betriebsmodus zurückgesetzt wird, dann kann dies anhand des mindestens einen ausgewerteten Parameters erkannt werden und das Steuergerät kann automatisch in den Betriebsmodus geschaltet werden. Somit kann durch Ausführungsformen der vorliegenden Erfindung ein normaler Fahrbetrieb des Fahrzeugs im Diagnosemodus bzw. Rollenmodus mit deaktivierten und/oder eingeschränkten Fahrzeugfunktionen verhindert bzw. stark eingeschränkt werden.
Ein erfindungsgemäßes Fahrzeug umfasst neben dem erfindungsgemäßen elektronischen Steuergerät zur Durchführung von mindestens einer Fahrzeugfunktion einen Antriebsstrang, mindestens eine Sensoreinheit und mindestens eine Diagnoseschnittstelle, wobei das erfindungsgemäße Steuergerät automatisch vom Diagnosemodus bzw. Rollenmodus in den Betriebsmodus umschaltet.
Um ein erfindungsgemäßes Betriebsverfahren für ein Steuergerät zu schaffen weist das Steuergerät mindestens eine Schnittstelle und eine Recheneinheit auf, wobei das Steuergerät einen Betriebsmodus und einen Diagnosemodus bzw. Rollenmodus aufweist. Im Betriebsmodus und/oder im Diagnosemodus werden Sensordaten von mindestens einer Sensoreinheit über die mindestens eine Schnittstelle empfangen und ausgewertet und in Abhängigkeit der ausgewerteten Sensordaten wird mindestens eine Fahrzeugfunktion ansteuert. Im Diagnosemodus bzw. Rollenmodus wird mindestens eine Fahrzeugfunktion eingeschränkt und Diagnoseeingabedaten zum Testen des Steuergeräts und/oder der mindestens einen Sensoreinheit und/oder der mindestens einen Fahrzeugfunktion werden über eine Diagnoseschnittstelle von einem externen Diagnosegerät empfangen und Diagnoseausgabedaten werden über die Diagnoseschnittstelle an das externe Diagnosegerät ausgegeben. Erfindungsgemäß wird mindestens ein Parameter fortlaufend und nach vorgegebenen Kriterien zur Erkennung eines aktuellen Fahrzeugzustandes ausgewertet und in Abhängigkeit von der Auswertung des mindestens einen Parameters wird das Steuergerät vom Diagnosemodus in den Betriebsmodus umgeschaltet, wenn der mindestens eine ausgewertete Parameter einen normalen Fahrbetrieb anzeigt und/oder für den Diagnosemodus unplausibel erscheint.
Ausführungsformen der vorliegenden Erfindung ermöglichen ein sicheres Stehen des Fahrzeugs, insbesondere eines allradgetriebenen Fahrzeuges, unabhängig vom aktuellen Antriebskonzept auf allen bekannten Rollenprüfständen und eine sichere Erkennung des jeweiligen Rollenprüfstands. Des Weiteren sind in vorteilhafter Weise keine zusätzlichen Arbeiten durch Ausbauen bzw. Abklemmen von Sensoren oder andere Fahrzeugumbauten erforderlich, um das Fahrzeug in einem Diagnosemodus zu betreiben. Zudem ergibt sich ein Schutz vor unerlaubtem Tuning, da spezielles Equipment (VAS Tester) benötigt wird, um einen Fahrmodus zu erlangen, in welchem das Fahrzeug mit einem inaktiven Fahrzeugsicherheitssystem betrieben werden kann, wobei dieser Fahrmodus automatisch bei einem erkannten normalen Fahrbetrieb automatisch wieder verlassen wird. Auch bei Diagnosemodi bzw. Rollenmodi, welche ohne eine spezielle Ausrüstung aktiviert werden können, kann durch Ausführungsformen der Erfindung die Betriebssicherheit erhöht werden, da automatisch in den normalen Betriebsmodus zurückgeschaltet wird, wenn ein normaler Fahrbetrieb und/oder ein für den Diagnosemodus unplausibel erscheinender Fahrzustand erkannt werden.

In vorteilhafter Ausgestaltung des erfindungsgemäßen elektronischen Steuergeräts umfasst der mindestens eine ausgewertete Parameter eine Drehzal und/oder eine Geschwindigkeit und/oder einen Lenkwinkel und/oder eine Gierrate und/oder eine Beschleunigung und/oder eine Temperatur und/oder eine Luftfeuchtigkeit und/oder eine geometrische Größe im Fahrzeugumfeld und/oder eine Fahrzeugneigung. Die erwähnten Parameter bleiben in vorteilhafter Weise in einer Testsituation auf einem Rollenprüfstand nahezu konstant bzw. weisen feste Wertebereiche auf. Beispielsweise kann eine bestimmte Geschwindigkeit bzw. Motordrehzahl bzw. Raddrehzahl nicht überschritten werden. Im Realbetrieb kann sich die Geschwindigkeit bzw. die Motordrehzahl bzw. die Raddrehzahl häufiger ändern und andere Werte erreichen als in der Testsituation. Auch der Lenkwinkel ist in der Testsituation nahezu konstant und beträgt ungefähr null Grad. Somit eignet sich der Lenkwinkel sehr gut als auszuwertender Parameter zur Erkennung eines normalen Fahrbetriebs. Das bedeutet, dass die Lenkung nicht bestätigt wird und die Räder in Fahrtrichtung zeigen, während bei einer normalen Straßenfahrt die Räder in vorhandenen Kurven eingeschlagen werden und der Lenkwinkel sehr stark variiert. Auch die Auswertung von Querbeschleunigungen und die daraus resultierenden Zentrifugal-und Zentripetalkräfte eignen sich sehr gut zur Erkennung eines normalen Fahrbetriebs, das sie in der Diagnosesituation auf dem Rollenprüfstand in der Regeln nur vermindert oder gar nicht auftreten. Ebenso die daraus resultierenden Neigungen des Fahrzeugs. Da die Funktionstests für gewöhnlich in einer Halle stattfinden, in welcher die Umgebungstemperatur nahezu konstant ist, während das Fahrzeug im Realbetrieb äußeren Temperaturschwankungen durch Fahrtwind, unterschiedliche Reflektionen von Infrarotstrahlung am Fahrbahnbelag, Schatten usw. unterworfen ist, ist die Temperatur ebenfalls ein geeigneter Parameter zur Erkennung eines normalen Fahrbetriebs. Zudem ist auch die Luftfeuchtigkeit in einer Halle in der Regel konstant, so dass beim Verlassen der Halle oder beim Bewegen des Fahrzeugs unterschiedliche Luftfeuchtigkeitswerte gemessen werden können. Des Weiteren können auch geometrische Größen, wie Abstände zu Objekten, welche durch eine Umfeldsensorik erfasst werden zur Erkennung eines normalen Fahrbetriebs verwendet werden, da die ermittelten Abstände aufgrund der örtlichen Gegebenheiten im Testumfeld auf dem Rollenprüfstand gleich bleiben und sich nicht ändern, es sei denn die Umfeldsensorik selbst wird getestet. In vorteilhafter Weise findet sich für nahezu jede Testsituation mindestens ein Parameter oder eine Kombination von Parametern, über welche man zwischen einem normalen Fahrbetrieb und einer Testsituation unterscheiden kann. Auf diese Weise findet in vorteilhafter Weise eine effektive Unterscheidung zwischen realem Fahrbetrieb, in welchem die vollständige Sicherheitsfunktion und alle Fahrzeugfunktionen aktiviert sein sollten, und einer Diagnosesituation statt, in welcher Teile der Fahrzeugfunktionen abgeschwächt und/oder deaktiviert sein sollten.

In weiterer vorteilhafter Ausgestaltung des elektronischen Steuergeräts ist ein vorgegebenes Kriterium zur Auswertung des mindestens einen Parameters ein festgelegter Wertebereich. Die Recheneinheit aktiviert den Betriebsmodus, wenn die erfassten Werte des mindestens einen Parameters zumindest teilweise außerhalb des vorgegebenen Wertebereichs liegen. Das heißt, dass beispielsweise der Lenkwinkel und/oder ein anderer vorgegebener Parameter im Diagnosemodus bzw. Rollenmodus einen bestimmten Wertbereich mit einem vorgegebenen Toleranzbereich nicht überschreiten dürfen. Dieser Wertebereich und der korrespondierende Toleranzbereich kann in vorteilhafter Weise je nach Testsituation eingestellt und/oder gespeichert und/oder aufgerufen werden. Überschreitet der gemessene Parameterwert den vorgegebenen Wertebereich, dann wird das Steuergerät vom Diagnosemodus bzw. Rollenmodus in den Betriebsmodus umgeschaltet.

In weiterer vorteilhafter Ausgestaltung des elektronischen Steuergeräts aktiviert die Recheneinheit den Betriebsmodus dann, wenn die Anzahl der außerhalb des vorgegebenen Wertebereichs liegenden Messwerte einen vorgegebenen Schwellwert übersteigt und/oder wenn die erfassten Werte mindestens für eine vorgegebene Zeitspanne außerhalb des vorgegebenen Wertebereichs liegen. Auf diese Weise wird in vorteilhafter Weise verhindert, dass der Diagnosemodus bzw. Rollenmodus beendet wird, sobald nur ein einzelner Messerwert außerhalb des vorgegebenen Wertebereichs liegt, da Messfehler und/oder andere kurzeitige Einflüsse eine Änderung des Messwertes mit sich bringen können.

Besonders vorteilhaft ist es, wenn mehrere verschiedene Parameter zur Erkennung des normalen Fahrbetriebs miteinander kombiniert werden, da seine solche Parameterkombination eine verbesserte Unterscheidung des Diagnosemodus und des Betriebsmodus ermöglicht. So können beispielsweise mehrere verschiedene Parameter mit mehreren Wertebereichen zur Auswertung vorgegeben werden. Auf diese Weise kann eine aktuelle Fahrsituation realistischer abgeschätzt werden, wodurch ein Umschalten von dem Diagnosemodus in den Betriebsmodus in vorteilhafter Weise nur dann vorkommen kann, wenn dies auch situationsbedingt erwünscht ist.

Besonders vorteilhaft ist, dass ausschließlich über die Diagnoseschnittstelle empfangene Diagnoseeingabedaten des Diagnosegeräts den Diagnosemodus des Steuergeräts aktivieren können. In vorteilhafter Weise kann dadurch verhindert werden, dass der Diagnosemodus von unbefugten Personen zu nicht legalen Tuningaktivitäten aktiviert wird. Insbesondere kann auf diese Weise das Umgehen der Sicherheitsfunktionen und/oder einer anderen Fahrzeugfunktion unterbunden werden. Somit wird ein sicheres Stehen und/oder Fahren des Fahrzeugs auf der Prüfrolle und gleichzeitig noch ein Tuningschutz, gewährleistet, um nicht fahrlässig oder vorsätzlich ohne aktivierte Sicherheitsfunktionen in grenzwertige Fahrsituationen zu geraten. Zusätzlich oder alternativ kann unter bestimmten Voraussetzungen aber auch eine im Fahrzeug eingegebene Bedien- und Tastenkombination zur Aktivierung des Diagnosemodus bzw. Rollenmodus vorgesehen werden, um auch ohne Diagnosegerät einen Diagnosemodus aktivieren zu können.

In weiterer vorteilhafter Ausgestaltung des elektronischen Steuergeräts ist die mindestens eine Fahrzeugfunktion beispielsweise ein elektronisches Stabilitätsprogramm (ESP) und/oder ein Antiblockiersystem (ABS) und/oder eine Antischlupfregelung (ASR) und/oder eine Motorschleppmomentregelung (MSR) und/oder eine Rekuperationsfunktion und/oder ein ansteuerbarer Spoiler und/oder ein Airbag und/oder ein Überrollbügel. Diese Fahrzeugfunktionen sind wichtig für die Sicherheit im Realbetrieb, können aber im Testbetrieb stören und/oder Funktionstests unterbinden und/oder erschweren. In vorteilhafter Weise kann eine irreversibel auslösbare Funktion wie beispielsweise der Airbag, während des Funktionstests nicht aktiviert werden, was Kosten und einen doppelten Prüfaufwand spart.

In weiterer vorteilhafter Ausgestaltung des elektronischen Steuergeräts ermittelt die Recheneinheit im Diagnosemodus beim Anlaufen der Fahrzeugräder durch Auswerten von zugeordneten Radgeschwindigkeiten bzw. Raddrehzahlen eine aktuelle Antriebssituation und passt die Steuersignale für die mindestens eine Fahrzeugfunktion entsprechend an.

Die Recheneinheit kann im Diagnosemodus beispielsweise einen rollenseitigen oder fahrzeugseitigen Heck-, Front- oder Allradantrieb unterscheiden.

In Ausgestaltung des erfindungsgemäßen Betriebsverfahrens für ein Steuergerät werden aktuelle Werte des mindestens einen Parameters durch die mindestens eine Sensoreinheit erfasst und der Betriebsmodus wird aktiviert, wenn die erfassten Werte des mindestens einen Parameters zumindest teilweise außerhalb des vorgegebenen Wertebereichs liegen und die Anzahl der außerhalb des vorgegebenen Wertebereich liegenden Werte einen vorgegebenen Schwellwert übersteigt oder die erfassten Werte mindestens für eine vorgegebene Zeitspanne außerhalb des vorgegebenen Wertebereichs liegen. Durch die Verwendung von bereits im Fahrzeug vorhandenen Sensoreinheiten können Ausführungsformen der vorliegenden Erfindung besonders einfach und kostengünstig im Fahrzeug implementiert werden. Des Weiteren kann über den Schwellwert bzw. die Zeitbedingung in vorteilhafter Weise ein zu frühes Beenden des Diagnosemodus bzw. Rollenmodus, beispielsweise aufgrund eines einmaligen Messfehlers und/oder von Sensorrauschen und/oder eines kleineren Bedienfehlers des Prüfers unterbunden werden.

Des Weiteren wird vorgeschlagen, dass der Diagnosemodus ausschließlich über die Diagnoseschnittstelle aktiviert werden kann. Auf diese Weise kann verhindert werden, dass der Diagnosemodus von unbefugten Personen aktiviert wird. Insbesondere kann auf diese Weise das Umgehen der Sicherheitsfunktionen und/oder einer anderen Fahrzeugfunktion unterbunden werden. Über die Schnittstelle werden zudem weitere Daten zwischen dem Diagnosegerät und dem Steuergerät ausgetauscht, wie beispielsweise erfasst Diagnosedaten und/oder Ausgabedaten und/oder Eingabedaten und/oder Diagnosebefehle und/oder Steuersignale. Zusätzlich oder alternativ kann unter bestimmten Voraussetzungen aber auch eine im Fahrzeug eingegebene Bedien- und Tastenkombination zur Aktivierung des Diagnosemodus bzw. Rollenmodus vorgesehen werden, um auch ohne Diagnosegerät einen Diagnosemodus aktivieren zu können.

In weiterer vorteilhafter Ausgestaltung des erfindungsgemäßen Betriebsverfahrens kann im Diagnosemodus beim Anlaufen der Fahrzeugräder durch Auswerten von zugeordneten Radgeschwindigkeiten bzw. Raddrehzahlen eine aktuelle Antriebssituation ermittelt und die Steuersignale für die mindestens eine Fahrzeugfunktion entsprechend anpasst werden, wobei ein rollenseitiger oder fahrzeugseitiger Heck-, Front- oder Allradantrieb unterschieden werden kann.

Vorteilhafte Ausführungsformen der Erfindung sind in der Zeichnung dargestellt und werden nachfolgend beschrieben.

Dabei zeigen:
- Fig. 1: ein Blockschaltbild eines Ausführungsbeispiels eines erfindungsgemäßen Steuergeräts für ein Fahrzeug,
- Fig. 2: eine schematische Seitenansicht eines erfindungsgemäßen Fahrzeugs auf einem Rollenprüfstand.

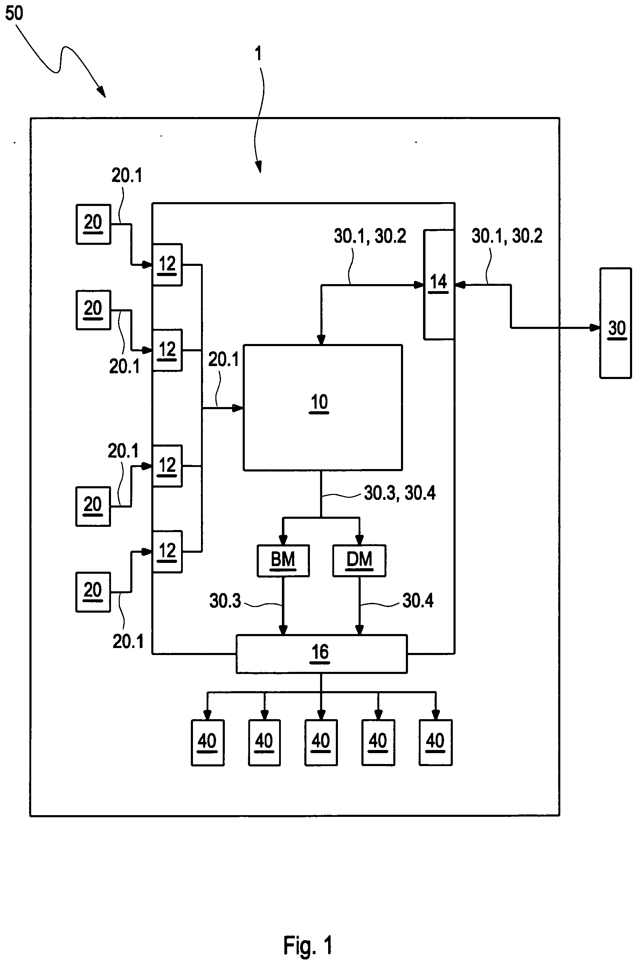

Wie aus Fig. 1 ersichtlich ist, weist ein elektronische Steuergerät 1 für ein Fahrzeug 50 mindestens eine Schnittstelle 12, 16 und eine Recheneinheit 10 auf, wobei das Steuergerät 1 einen Betriebsmodus BM und einen Diagnosemodus DM bzw. Rollenmodus aufweist. Im dargestellten Ausführungsbeispiel empfängt die Recheneinheit 10 des Steuergeräts 1 im Betriebsmodus BM und/oder im Diagnosemodus DM Sensordaten 20.1 von vier Sensoreinheiten 20 über vier Schnittstellen 12. Die Sensoreinheiten 20 messen beispielsweise die Fahrzeuggeschwindigkeit und/oder die Motordrehzahl und/oder die Drehraten und/oder Drehgeschwindigkeiten und/oder Lenkwinkel der einzelnen Räder 51 und/oder Kräfte, welche an vier unterschiedlichen Positionen des Fahrzeugs 50 wirken, und/oder Abstände zu umliegenden Objekten und/oder die Luftfeuchtigkeit der Umgebung und/oder die Umgebungstemperatur und/oder eine Neigung des Fahrzeugs. Die Recheneinheit 10 wertet dieses Sensordaten 20.1 aus. In Abhängigkeit der ausgewerteten Sensordaten 20.1 steuert die Recheneinheit 10 im Betriebsmodus BM über entsprechende Steuersignale 30.3 mindestens eine Fahrzeugfunktion 40 an, wobei die Steuersignale 30.3 über eine weitere Schnittstelle 16 ausgegeben werden. Die mindestens eine Fahrzeugfunktion 40 kann beispielsweise ein Schlingern des Fahrzeugs 50 über das gezielte Abbremsen und/oder Beschleunigungen einzelner Fahrzeugräder 51 unterbinden bzw. verringern und als elektronisches Stabilitätsprogramm (ESP) und/oder Antiblockiersystem (ABS) und/oder Antischlupfregelung (ASR) und/oder Motorschleppmomentregelung (MSR) und/oder Rekuperationsfunktion und/oder ansteuerbarer Spoiler ausgeführt sein. Zusätzlich oder alternativ kann die mindestens eine Fahrzeugfunktion 40 Teil eines Personenschutzsystems sein und beispielsweise einen Airbag und/oder einen Überrollbügel aktivieren bzw. auslösen, sobald sich ein Objekt auf das Fahrzeug 50 zubewegt bzw. das Fahrzeug 50 sich auf das Objekt zubewegt und durch Auswerten der Sensordaten 20.1 eine bevorstehende Kollision erkannt wird. Im Diagnosemodus DM bzw. Rollenmodus schränkt die Recheneinheit 10 mindestens eine der Fahrzeugfunktionen 40 über mindestens einen weiteren Steuerbefehl 30.4 ein, welcher über die Schnittstelle 16 übertragen wird. Durch die Einschränkung der Fahrzeugfunktionen 40 können unterschiedliche Drehzahlen an den Rädern 51 erzeugt und gemessen werden, ohne dass die mindestens eine Fahrzeugfunktion 40, wie beispielsweise das elektronische Stabilitätsprogramm (ESP) und/oder das Antiblockiersystem (ABS) und/oder die Antischlupfregelung (ASR) eingreift und versucht die unterschiedlichen Drehzahlen auszugleichen. Über die Einschränkung 30.2 bzw. Deaktivierung von Fahrzeugfunktionen 40 kann in vorteilhafter Weise sichergestellt werden, dass die Testmessungen nicht gestört werden und/oder irreversible Funktionen während des Diagnosemodus versehentlich aktiviert werden. Im Diagnosemodus DM bzw. Rollenmodus wird das Steuergerät 1 und/oder die mindestens eine Sensoreinheit 20 und/oder die mindestens einen Fahrzeugfunktion 40 und/oder ein nicht dargestellter Antriebsstrang des Fahrzeugs getestet. Über eine Diagnoseschnittstelle 14 empfängt die Recheneinheit Diagnosedaten 30.1, welche den Diagnosemodus DM bzw. Rollenmodus aktivieren und Ansteuerbefehle für das elektronische Steuergerät 1 und/oder die mindestens eine Sensoreinheit 20 und/oder die mindestens eine Fahrzeugfunktion 40 und/oder den Antriebsstrang umfassen können, um eine Reduzierung und/oder Deaktivierung der mindestens einen Fahrzeugfunktion 40 zu bewirken und/oder verschiedene Sensordaten 20.1 oder andere Daten zur Auswertung anzufordern. Das Fahrzeug 50 wird insbesondere in eine vorgegebene Diagnosesituation versetzt und das Auswerteergebnis der erfassten Sensordaten 20.1 wird als Diagnoseausgabedaten 30.2 über die Diagnoseschnittstelle 14 an das externe Diagnosegerät 30 ausgegeben, welches die Diagnoseausgabedaten 30.2 und mit vorgegebenen Daten und/oder Kennlinien verglichen, welche in der vorgegebenen Testsituation bzw. Diagnosesituation zu erwarten sind. Des Weiteren können auch vom Diagnosegerät 30 angeforderte Sensordaten 20.1 über die Diagnoseschnittstelle 14 ausgegeben werden.

Um ein Steuergerät 1 für ein Fahrzeug 50 zu schaffen, welches zwischen einem Diagnosemodus DM bzw. Rollenmodus und einem Betriebsmodus BM wechselt, wenn der aktuelle Fahrzeugzustand dies erfordert, wird erfindungsgemäß vorgeschlagen, dass die Recheneinheit 10 mindestens einen Parameter fortlaufend und nach vorgegebenen Kriterien zur Erkennung eines aktuellen Fahrzeugzustandes auswertet und in Abhängigkeit von der Auswertung des mindestens einen Parameters das Steuergerät 1 vom Diagnosemodus DM bzw. Rollenmodus in den Betriebsmodus BM umschaltet, wenn der mindestens eine ausgewertete Parameter einen normalen Fahrbetrieb anzeigt und/oder für den Diagnosemodus DM bzw. Rollenmodus unplausibel erscheint. Empfängt die Recheneinheit 10 im Diagnosemodus DM bzw. Rollenmodus von der mindestens einen Sensoreinheit 20, welche den mindestens einen Parameter oder eine Kombination von mehreren verschiedenen Parameter erfasst, Sensordaten 20.1, welche auf einen normalen Fahrzeugzustand hinweisen, welcher den Betriebsmodus BM erfordert, und/oder für den Diagnosemodus (DM) unplausibel erscheinen, dann gibt die Recheneinheit 10 einen Steuerbefehl 30.3 an die mindestens eine Fahrzeugfunktion 40 aus, welcher die eingeschränkten Fahrzeugfunktionen 40 in ihren normalen Betriebsmodus versetzt bzw. deaktivierte Teile der Fahrzeugfunktionen 40 wieder aktiviert.

Im dargestellten Ausführungsbeispiel umfasst der mindestens eine ausgewertete Parameter eine Drehzal und/oder eine Geschwindigkeit und/oder ein Lenkwinkel und/oder eine Gierrate und/oder eine Querbeschleunigung und/oder eine Temperatur und/oder eine Luftfeuchtigkeit und/oder eine geometrische Größe im Fahrzeugumfeld, wie der Abstand zu Objekten, und/oder eine Fahrzeugneigung. Das vorgegebene Kriterium zur Auswertung des mindestens einen Parameters ist hierbei ein festgelegter Wertebereich, wobei die Recheneinheit 10 den Betriebsmodus BM aktiviert, wenn die erfassten Werte des mindestens einen Parameters zumindest teilweise außerhalb des vorgegebenen Wertebereichs liegen und die Anzahl der außerhalb des vorgegebenen Wertebereichs liegenden Werte einen vorgegebenen Schwellwert übersteigt und/oder wenn die erfassten Werte mindestens für eine vorgegebene Zeitspanne außerhalb des vorgegebenen Wertebereichs liegen. Auf diese Weise kann beispielsweise eine durch Messfehler bewirkte unnötige Aktivierung des Betriebsmodus BM während des Diagnosemodus DM unterbunden werden. Der überwachte Wertebereich des mindestens einen Parameters kann je nach Testsituation auch über das Diagnosegerät 30 durch entsprechende Diagnoseeingabedaten 30.1 variiert werden. Um einen Tuningschutz zu gewährleisten, können die überwachten Wertebereiche des mindestens einen Parameters in vorteilhafter Weise fest in einer Betriebssoftware hinterlegt werden.

Im dargestellten Ausführungsbeispiel wird der Diagnosemodus des elektronischen Steuergeräts 1 ausschließlich durch die Diagnoseeingabedaten 30.1 aktiviert, welche über die Diagnoseschnittstelle 14 vom externen Diagnosegerät 30 empfangen werden. Zur Ansteuerung bzw. Überwachung des Diagnosemodus kann das Diagnosegerät 30 eine geeignete Ein- und Ausgabeschnittstelle aufweisen. Zusätzlich oder alternativ kann unter bestimmten Voraussetzungen aber auch eine im Fahrzeug eingegebene Bedien- und Tastenkombination zur Aktivierung des Diagnosemodus DM bzw. Rollenmodus vorgesehen werden, um auch ohne Diagnosegerät 30 einen Diagnosemodus DM aktivieren zu können.

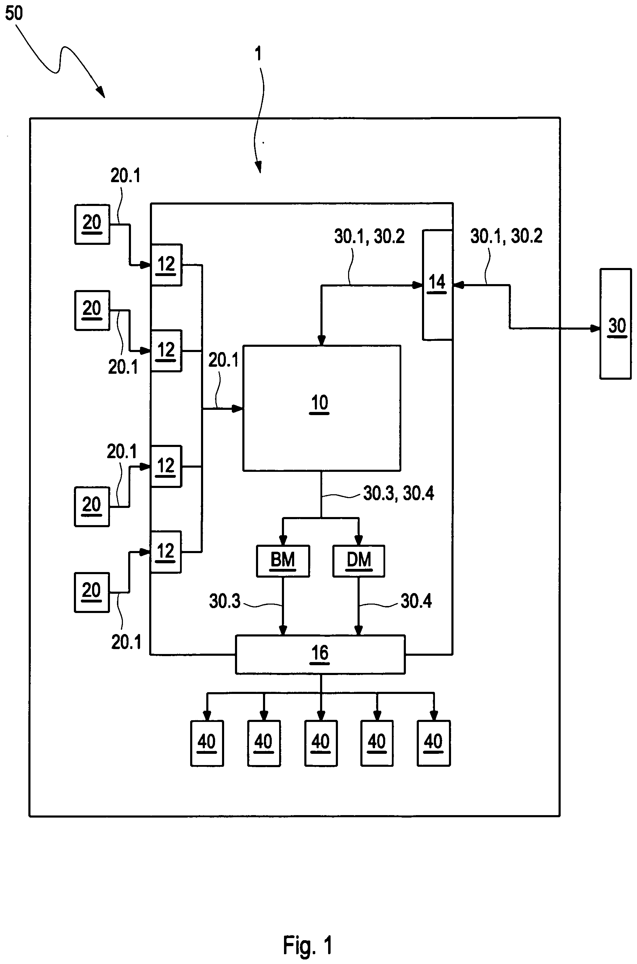

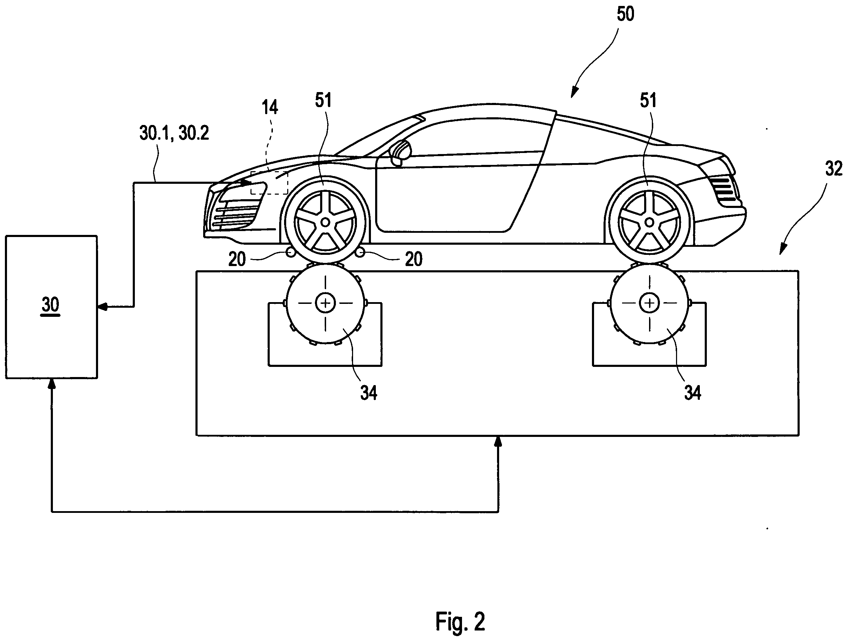

Wie aus Fig. 2 ersichtlich ist, wird das Fahrzeug 50 auf einem geeigneten Rollenprüfstand 32, welcher mehrere Rollen 34 aufweist, welche die einzelnen Fahrzeugräder 51 antreiben oder welche von den einzelnen Fahrzeugrädern 51 angetrieben werden, vom Diagnosegerät 30 über die Diagnoseschnittstelle 14 in den Diagnosemodus DM versetzt. Im dargestellten Ausführungsbeispiel steuert das Diagnosegerät 30 während der Diagnose über eine entsprechende Schnittstelle optional auch den Rollenprüfstand 32, so dass der Fahrzeugtriebstrang, die Fahrzeugfunktionen 40, die Sensoreinheiten 20 und/oder das elektronische Steuergerät 1 getestet werden können.

Zudem ist die Recheneinheit 10 des dargestellten elektronischen Steuergeräts 1 in der Lage, im Diagnosemodus DM bzw. Rollenmodus beim Anlaufen der Fahrzeugräder 51 durch Auswerten von zugeordneten Radgeschwindigkeiten bzw. Raddrehzahlen eine aktuelle Antriebssituation zu ermitteln und die Steuersignale 30.3, 30.4 für die mindestens eine Fahrzeugfunktion 40 entsprechend anzupassen. Die Recheneinheit 10 kann im Diagnosemodus DM beispielsweise einen rollenseitigen oder fahrzeugseitigen Heck-, Front- oder Allradantrieb unterscheiden und dadurch verschiedene Rollenprüfstände 32 erkennen und unterscheiden.

Ausführungsformen der vorliegenden Erfindung ermöglichen in vorteilhafter Weise ein automatisches Umschalten von dem Diagnosemodus in den Betriebsmodus, wenn während des Diagnosemodus durch Auswerten von mindestens einem Parameter ein ermittelter Fahrzeugzustand als normaler Fahrbetrieb erkannt wird. Auf diese Weise kann sichergestellt werden, dass das Fahrzeug im normalen Fahrbetrieb voll funktionsfähig ist, wenn nach der Diagnose vergessen wurde, den Diagnosemodus zu deaktivieren und den Betriebsmodus wieder zu aktivieren.

### BEZUGSZEICHENLISTE

- 1: Steuergerät
- 10: Recheneinheit
- 12: erste Schnittstelle (für Sensorsignale)
- 14: Diagnoseschnittstelle
- 16: zweite Schnittstelle (Fahrzeugfunktionen)
- 20: Sensoreinheit
- 20.1: Sensorsignale
- 30: Diagnosegerät
- 30.1: Diagnoseeingabedaten
- 30.2: Diagnoseausgabedaten
- 30.3: Steuersignal (Aktivieren)
- 30.4: Steuersignal (Deaktivieren)
- 32: Rollenprüfstand
- 34: Rolle
- 40: Fahrzeugfunktion
- 50: Fahrzeug
- 51: Fahrzeugrad
- BM: Betriebsmodus
- DM: Diagnosemodus

## Patentansprüche

1. Elektronisches Steuergerät (1) für ein Fahrzeug (50) mit mindestens einer Schnittstelle (12, 16) und einer Recheneinheit (10), wobei das Steuergerät (1) einen Betriebsmodus (BM) und einen Diagnosemodus (DM) aufweist, wobei das Steuergerät (1) im Betriebsmodus (BM) und/oder im Diagnosemodus (DM) Sensordaten (20.1) von mindestens einer Sensoreinheit (20) über die mindestens eine Schnittstelle (12) empfängt und in der Recheneinheit (10) auswertet und in Abhängigkeit der ausgewerteten Sensordaten (20.1) mindestens eine Fahrzeugfunktion (40) ansteuert, und wobei das Steuergerät (1) im Diagnosemodus (DM) mindestens eine Fahrzeugfunktion (40) einschränkt und Diagnoseeingabedaten (30.1) zum Testen des Steuergeräts (1) und/oder der mindestens einen Sensoreinheit (20) und/oder der mindestens einen Fahrzeugfunktion (40) über eine Diagnoseschnittstelle (14) von einem externen Diagnosegerät (30) empfängt und Diagnoseausgabedaten (30.2) über die Diagnoseschnittstelle (14) an das externe Diagnosegerät (30) ausgibt, **dadurch gekennzeichnet, dass** die Recheneinheit (10) mindestens einen Parameter fortlaufend und nach vorgegebenen Kriterien zur Erkennung eines aktuellen Fahrzeugzustandes auswertet, wobei die Recheneinheit (10) in Abhängigkeit von der Auswertung des mindestens einen Parameters das Steuergerät (1) vom Diagnosemodus (DM) in den Betriebsmodus (BM) umschaltet, wenn der mindestens eine ausgewertete Parameter einen normalen Fahrbetrieb anzeigt und/oder für den Diagnosemodus (DM) unplausibel erscheint, wobei der Diagnosemodus (DM) einem Rollenmodus entspricht, bei welchem das Fahrzeug (50) auf einem Rollenprüfstand (32) steht.

2. Elektronisches Steuergerät (1) nach Anspruch 1, **dadurch gekennzeichnet, dass** der mindestens eine ausgewertete Parameter eine Drehzahl und/oder eine Geschwindigkeit und/oder einen Lenkwinkel und/oder eine Gierrate und/oder eine Beschleunigung und/oder eine Temperatur und/oder eine Luftfeuchtigkeit und/oder eine geometrische Größe im Fahrzeugumfeld und/oder eine Fahrzeugneigung umfasst.

3. Elektronisches Steuergerät (1) nach einem der Ansprüche 1 oder 2, **dadurch gekennzeichnet, dass** ein vorgegebenes Kriterium zur Auswertung des mindestens einen Parameters ein vorgegebener Wertebereich ist, wobei die Recheneinheit (10) den Betriebsmodus (BM) aktiviert, wenn die erfassten Werte des mindestens einen Parameters zumindest teilweise außerhalb des vorgegebenen Wertebereichs liegen.

4. Elektronisches Steuergerät (1) nach Anspruch 3, **dadurch gekennzeichnet, dass** die Recheneinheit (10) den Betriebsmodus (BM) aktiviert, wenn die Anzahl der außerhalb des vorgegebenen Wertebereich liegenden Werte einen vorgegebenen Schwellwert übersteigt und/oder wenn die erfassten Werte mindestens für eine vorgegebene Zeitspanne außerhalb des vorgegebenen Wertebereichs liegen.

5. Elektronisches Steuergerät (1) nach einem der Ansprüche 1 bis 4, **dadurch gekennzeichnet, dass** über die Diagnoseschnittstelle (14) empfangene Diagnoseeingabedaten (30.1) des externen Diagnosegeräts (30) und/oder eine im Fahrzeug eingegebene Bedien- und Tastenkombination den Diagnosemodus (DM) des Steuergeräts (1) aktivieren.

6. Elektronisches Steuergerät (1) nach einem der Ansprüche 1 bis 5, **dadurch gekennzeichnet, dass** die mindestens eine Fahrzeugfunktion (40) ein elektronisches Stabilitätsprogramm (ESP) und/oder ein Antiblockiersystem (ABS) und/oder eine Antischlupfregelung (ASR) und/oder eine Motorschleppmomentregelung (MSR) und/oder eine Rekuperationsfunktion und/oder ein ansteuerbarer Spoiler ist.

7. Elektronisches Steuergerät (1) nach einem der Ansprüche 1 bis 6, **dadurch gekennzeichnet, dass** die Recheneinheit (10) im Diagnosemodus (DM) beim Anlaufen der Fahrzeugräder (51) durch Auswerten von zugeordneten Radgeschwindigkeiten eine aktuelle Antriebssituation ermittelt und die Steuersignale (30.3, 30.4) für die mindestens eine Fahrzeugfunktion (40) entsprechend anpasst.

8. Elektronisches Steuergerät (1) nach Anspruch 7, **dadurch gekennzeichnet, dass** die Recheneinheit (10) im Diagnosemodus (DM) einen rollenseitigen oder fahrzeugseitigen Heck-, Front- oder Allradantrieb unterscheidet.

9. Fahrzeug (50) mit einem Antriebsstrang, mindestens einer Sensoreinheit (20), und mindestens einem elektronischen Steuergerät (1) zur Durchführung von mindestens einer Fahrzeugfunktion (40) und mindestens einer Diagnoseschnittstelle (14), **dadurch gekennzeichnet, dass** das elektronische Steuergerät (1) nach einem der Ansprüche 1 bis 8 ausgeführt ist.

10. Betriebsverfahren für ein Steuergerät (1) mit mindestens einer Schnittstelle (12, 16) und einer Recheneinheit (10), wobei das Steuergerät (1) einen Betriebsmodus (BM) und einen Diagnosemodus (DM) aufweist, wobei das Steuergerät (1) im Betriebsmodus (BM) und/oder im Diagnosemodus (DM) über die mindestens eine Schnittstelle (12) Sensordaten (20.1) von mindestens einer Sensoreinheit (20) empfängt und auswertet und in Abhängigkeit der ausgewerteten Sensordaten (20.1) mindestens eine Fahrzeugfunktion (40) ansteuert, und wobei das Steuergerät (1) im Diagnosemodus (DM) mindestens eine Fahrzeugfunktion (40) einschränkt und Diagnoseeingabedaten (30.1) zum Testen des Steuergeräts (1) und/oder der mindestens einen Sensoreinheit (20) und/oder der mindestens einen Fahrzeugfunktion (40) über eine Diagnoseschnittstelle (14) von einem externen Diagnosegerät (30) empfängt und Diagnoseausgabedaten (30.2) über die Diagnoseschnittstelle (14) an das externe Diagnosegerät (30) ausgibt, **dadurch gekennzeichnet, dass** mindestens ein Parameter fortlaufend und nach vorgegebenen Kriterien zur Erkennung eines aktuellen Fahrzeugzustandes ausgewertet wird, wobei in Abhängigkeit von der Auswertung des mindestens einen Parameters das Steuergerät (1) vom Diagnosemodus (DM) in den Betriebsmodus (BM) umgeschaltet wird, wenn der mindestens eine ausgewertete Parameter einen normalen Fahrbetrieb anzeigt und/oder für den Diagnosemodus (DM) unplausibel erscheint, wobei der Diagnosemodus (DM) einem Rollenmodus entspricht, bei welchem das Fahrzeug (50) auf einem Rollenprüfstand (32) steht.

11. Betriebsverfahren für ein Steuergerät (1) nach Anspruch 10, **dadurch gekennzeichnet, dass** aktuelle Werte des mindestens einen Parameters durch die mindestens eine Sensoreinheit (40) erfasst werden, und dass der Betriebsmodus (BM) aktiviert wird, wenn die erfassten Werte des mindestens einen Parameters zumindest teilweise außerhalb eines vorgegebenen Wertebereichs liegen und die Anzahl der außerhalb des vorgegebenen Wertebereich liegenden Werte einen vorgegebenen Schwellwert übersteigt oder die erfassten Werte mindestens für eine vorgegebene Zeitspanne außerhalb des vorgegebenen Wertebereichs liegen.

12. Betriebsverfahren für ein Steuergerät (1) nach einem der Ansprüche 10 oder 11, **dadurch gekennzeichnet, dass** der Diagnosemodus (DM) über die Diagnoseschnittstelle (14) und/oder über eine im Fahrzeug (50) eingegebene Bedien- und Tastenkombination aktiviert wird.

13. Betriebsverfahren für ein Steuergerät (1) nach einem der Ansprüche 10 bis 12, **dadurch gekennzeichnet, dass** im Diagnosemodus (DM) beim Anlaufen der Fahrzeugräder (51) durch Auswerten von zugeordneten Radgeschwindigkeiten eine aktuelle Antriebssituation ermittelt und die Steuersignale (30.3, 30.4) für die mindestens eine Fahrzeugfunktion (40) entsprechend anpasst werden, wobei ein rollenseitiger oder fahrzeugseitiger Heck-, Front- oder Allradantrieb unterschieden werden.

## Claims

1. An electronic control device (1) for a vehicle (50) with at least one interface (12, 16) and one processing unit (10), wherein the control device (1) has an operating mode (BM) and a diagnosis mode (DM), wherein the control device (1) in operating mode (BM) and/or in diagnosis mode (DM) receives sensor data (20.1) from at least one sensor unit (20) via the at least one interface (12) and evaluates them in the processing unit (10) and, depending on the evaluated sensor data (20.1) actuates at least one vehicle function (40), and wherein the control device (1) in diagnosis mode (DM) restricts at least one vehicle function (40) and receives from one external diagnosis device (30) diagnosis input data (30.1) for testing the control device (1) and/or the at least one sensor unit (20) and/or the at least one vehicle function (40) via one diagnosis interface (14), and outputs diagnosis output data (30.2) via the diagnosis interface (14) to the external diagnosis device (30), **characterised in that** the processing unit (10) evaluates at least one parameter continuously and according to predetermined criteria for detecting an actual vehicle state, wherein the processing unit (10) switches the control device (1) from the diagnosis mode (DM) into the operating mode (BM) depending on the evaluation of the at least one parameter, when the at least one evaluated parameter shows a normal drive operation and/or appears implausible for the diagnosis mode (DM), wherein the diagnosis mode (DM) represents a rolling mode in which the vehicle (50) stands on a roller test bench (32).

2. Electronic control device (1) according to claim 1, **characterised in that** the at least one evaluated parameter comprises a revolution rate and/or a speed and/or a steer angle and/or a yaw rate and/or an acceleration and/or a temperature and/or an air humidity and/or a geometric dimension in the vehicle environment and/or a vehicle inclination.

3. Electronic control device (1) according to one of claims 1 or 2, **characterised in that** a predetermined criterion for evaluating the at least one parameter is a predetermined value range, wherein the processing unit (10) activates the operating mode (BM), when the detected values of the at least one parameter lie at least partially outside the predetermined value range.

4. Electronic control device (1) according to claim 3, **characterised in that** the processing unit (10) activates the operating mode (BM) when the number of the values lying outside the predetermined value range exceeds a predetermined threshold value and/or when the detected values at least for one predetermined time interval lie outside the predetermined value range.

5. Electronic control device (1) according to one of claims 1 to 4, **characterised in that** diagnosis input data (30.1) from the external diagnosis device (30) received via the diagnosis interface (14) and/or an operating and key combination inputted in the vehicle, activate the diagnosis mode (DM) of the control device (1).

6. Electronic control device (1) according to one of claims 1 to 5, **characterised in that** the at least one vehicle function (40) is an electronic stability programme (ESP) and/or an anti-lock braking system (ABS) and/or a traction control (ASR) and/or a drag torque control (MSR) and/or a recuperation function and/or a controllable spoiler.

7. Electronic control device (1) according to one of claims 1 to 6, **characterised in that** the processing unit (10) in diagnosis mode (DM) when the vehicle wheels (51) start turning detects an actual drive condition by evaluating assigned wheel speeds, and adjusts the control signals (30.3, 30.4) for the at least one vehicle function (40) accordingly.

8. Electronic control device (1) according to claim 7, **characterised in that** the processing unit (10) in diagnosis mode (DM) distinguishes a roller-sided or vehicle-sided rear-wheel drive, front-wheel drive or four-wheel drive.

9. Vehicle (50) with a drive train, at least one sensor unit (20), and at least one electronic control device (1) for carrying out at least one vehicle function (40) and at least one diagnosis interface (14), **characterised in that** the electronic control device (1) is constructed according to one of claims 1 to 8.

10. Operation method for a control device (1) with at least one interface (12, 16) and one processing unit (10), wherein the control device (1) has an operating mode (BM) and a diagnosis mode (DM), wherein the control device (1) in operating mode (BM) and/or in diagnosis mode (DM) receives via the at least one interface (12), and evaluates, sensor data (20.1) from at least one sensor unit (20) and depending on the evaluated sensor data (20.1) actuates at least one vehicle function (40), and wherein the control device (1) in diagnosis mode (DM) restricts at least one vehicle function (40) and receives diagnosis input data (30.1) for testing the control device (1) and/or the at least one sensor unit (20) and/or the at least one vehicle function (40) via a diagnosis interface (14) from an external diagnosis device (30), and outputs diagnosis output data (30.2) via the diagnosis interface (14) to the external diagnosis device (30), **characterised in that** at least one parameter is evaluated continuously and according to predetermined criteria for detecting an actual vehicle status, wherein depending on the evaluation of the at least one parameter, the control device (1) is switched from the diagnosis mode (DM) into the operating mode (BM), when the at least one evaluated parameter shows a normal drive operation and/or appears implausible for the diagnosis mode (DM), wherein the diagnosis mode (DM) represents a rolling mode in which the vehicle (50) stands on a roller test bench (32).

11. Operation method for a control device (1) according to claim 10, **characterised in that** actual values of the least one parameter are detected by the at least one sensor unit (40), and that the operating mode (BM) is activated when the detected values of the at least one parameter lie at least partially outside a predetermined value range and the number of the values lying outside the predetermined value range exceeds a predetermined threshold value or the detected values at least for one predetermined time interval lie outside the predetermined value range.

12. Operation method for a control device (1) according to one of claims 10 or 11, **characterised in that** the diagnosis mode (DM) is activated by the diagnosis interface (14) and/or by an operating and key combination inputted in the vehicle (50).

13. Operation method for a control device (1) according to one of claims 10 to 12, **characterised in that** in diagnosis mode (DM) when the vehicle wheels (51) start turning, through evaluation of assigned wheel speeds, an actual drive situation is detected and the control signals (30.3, 30.4) are adjusted accordingly for the at least one vehicle function (40), wherein distinction is made between a roller-sided or vehicle-sided rear-wheel drive, front-wheel drive or four-wheel drive.

## Revendications

1. Appareil de commande (1) électronique pour un véhicule (50) avec au moins une interface (12, 16) et une unité de calcul (10), dans lequel l'appareil de commande (1) présente un mode de fonctionnement (BM) et un mode de diagnostic (DM), dans lequel l'appareil de commande (1) reçoit, dans le mode de fonctionnement (BM) et/ou dans le mode de diagnostic (DM), des données de capteur (20.1) d'au moins une unité de capteur (20) par l'intermédiaire de l'au moins une interface (12) et les analyse dans l'unité de calcul (10) et pilote en fonction des données de capteur (20.1) analysées au moins une fonctionnalité de véhicule (40), et dans lequel l'appareil de commande (1) restreint dans le mode de diagnostic (DM) au moins une fonctionnalité de véhicule (40) et reçoit d'un appareil de diagnostic (30) externe des données de saisie de diagnostic (30.1) pour tester l'appareil de commande (1) et/ou l'au moins une unité de capteur (20) et/ou l'au moins une fonctionnalité de véhicule (40) par l'intermédiaire d'une interface de diagnostic (14) et envoie à l'appareil de diagnostic (30) externe des données de sortie de diagnostic (30.2) par l'intermédiaire de l'interface de diagnostic (14), **caractérisé en ce que** l'unité de calcul (10) analyse au moins un paramètre en continu et selon des critères spécifiés pour identifier un état de véhicule instantané, dans lequel l'unité de calcul (10) commute, en fonction de l'analyse de l'au moins un paramètre, l'appareil de commande (1) du mode de diagnostic (DM) dans le mode de fonctionnement (BM) quand l'au moins un paramètre analysé indique un fonctionnement de déplacement normal et/ou semble non plausible pour le mode de diagnostic (DM), dans lequel le mode de diagnostic (DM) correspond à un mode de roulement, dans lequel le véhicule (50) se trouve sur un banc dynamométrique (32).

2. Appareil de commande (1) électronique selon la revendication 1, **caractérisé en ce que** l'au moins un paramètre analysé comprend une vitesse de rotation et/ou une vitesse et/ou un angle de braquage et/ou une vitesse de lacet et/ou une accélération et/ou une température et/ou une humidité de l'air et/ou une grandeur géométrique dans l'environnement de véhicule et/ou une inclinaison de véhicule.

3. Appareil de commande (1) électronique selon l'une quelconque des revendications 1 ou 2, **caractérisé en ce qu'**un critère spécifié servant à analyser l'au moins un paramètre est une plage de valeurs spécifiée, dans lequel l'unité de calcul (10) active le mode de fonctionnement (BM) quand les valeurs détectées de l'au moins un paramètre se situent au moins en partie à l'extérieur de la plage de valeurs spécifiée.

4. Appareil de commande (1) électronique selon la revendication 3, **caractérisé en ce que** l'unité de calcul (10) active le mode de fonctionnement (BM) quand le nombre des valeurs se situant à l'extérieur de la plage de valeurs spécifiée dépasse une valeur de seuil spécifiée et/ou quand les valeurs détectées se situent au moins pour un intervalle de temps spécifié à l'extérieur de la plage de valeurs spécifiée.

5. Appareil de commande (1) électronique selon l'une quelconque des revendications précédentes 1 à 4, **caractérisé en ce que** des données de saisie de diagnostic (30.1) reçues par l'intermédiaire de l'interface de diagnostic (14) de l'appareil de diagnostic (30) externe et/ou une combinaison de commandes et de touches saisie dans le véhicule activent le mode de diagnostic (DM) de l'appareil de commande (1).

6. Appareil de commande (1) électronique selon l'une quelconque des revendications 1 à 5, **caractérisé en ce que** l'au moins une fonctionnalité de véhicule (40) est un programme de stabilité (ESP) électronique et/ou un système antiblocage (ABS) et/ou une régulation anti-patinage (ASR) et/ou une régulation de couple de traînée de moteur (MSR) et/ou une fonctionnalité de récupération et/ou un becquet pouvant être piloté.

7. Appareil de commande (1) électronique selon l'une quelconque des revendications 1 à 6, **caractérisé en ce que** l'unité de calcul (10) détermine dans le mode de diagnostic (DM) lors du démarrage des roues de véhicule (51) par l'analyse de vitesses de roue associées, une situation d'entraînement instantanée et adapte de manière correspondante les signaux de commande (30.3, 30.4) pour l'au moins une fonctionnalité de véhicule (40).

8. Appareil de commande (1) électronique selon la revendication 7, **caractérisé en ce que** l'unité de calcul (10) différencie dans le mode de diagnostic (DM) un entraînement de roues arrière, un entraînement de roues avant ou un entraînement de quatre roues motrices du côté roulement ou du côté véhicule.

9. Véhicule (50) avec une chaîne cinématique, au moins une unité de capteur (20) et au moins un appareil de commande (1) électronique servant à exécuter au moins une fonctionnalité de véhicule (40) et au moins une interface de diagnostic (14), **caractérisé en ce que** l'appareil de commande (1) électronique est réalisé selon l'une quelconque des revendications 1 à 8.

10. Procédé de fonctionnement pour un appareil de commande (1) avec au moins une interface (12, 16) et une unité de calcul (10), dans lequel l'appareil de commande (1) présente un mode de fonctionnement (BM) et un mode de diagnostic (DM), dans lequel l'appareil de commande (1) reçoit et analyse dans le mode de fonctionnement (BM) et/ou dans le mode de diagnostic (DM) par l'intermédiaire de l'au moins une interface (12) des données de capteur (20.1) d'au moins une unité de capteur (20) et pilote en fonction des données de capteur (20.1) analysées au moins une fonctionnalité de véhicule (40), et dans lequel l'appareil de commande (1) restreint dans le mode de diagnostic (DM) au moins une fonctionnalité de véhicule (40) et reçoit d'un appareil de diagnostic (30) externe des données de saisie de diagnostic (30.1) pour tester l'appareil de commande (1) et/ou l'au moins une unité de capteur (20) et/ou l'au moins une fonctionnalité de véhicule (40) et envoie des données de sortie de diagnostic (30.2) par l'intermédiaire de l'interface de diagnostic (14) à l'appareil de diagnostic (30) externe, **caractérisé en ce qu'**au moins un paramètre est analysé en continu et selon des critères spécifiés pour identifier un état de véhicule instantané, dans lequel l'appareil de commande (1) est commuté du mode de diagnostic (DM) dans le mode de fonctionnement (BM) en fonction de l'analyse de l'au moins un paramètre quand l'au moins un paramètre analysé indique un fonctionnement de déplacement normal et semble non plausible pour le mode de diagnostic (DM), dans lequel le mode de diagnostic (DM) correspond à un mode de roulement, dans lequel le véhicule (50) se trouve sur un banc dynamométrique (32).

11. Procédé de fonctionnement pour un appareil de commande (1) selon la revendication 10, **caractérisé en ce que** des valeurs instantanées de l'au moins un paramètre sont détectées par l'au moins une unité de capteur (40), et que le mode de fonctionnement (BM) est activé quand les valeurs détectées de l'au moins un paramètre se situent au moins en partie à l'extérieur d'une plage de valeurs spécifiée et le nombre des valeurs situées à l'extérieur de la plage de valeurs spécifiée dépasse une valeur de seuil spécifiée ou que les valeurs détectées se situent au moins pour un intervalle de temps spécifié à l'extérieur de la plage de valeurs spécifiées.

12. Procédé de fonctionnement pour un appareil de commande (1) selon l'une quelconque des revendications 10 ou 11, **caractérisé en ce que** le mode de diagnostic (DM) est activé par l'intermédiaire de l'interface de diagnostic (14) et/ou par l'intermédiaire d'une combinaison de commandes et de touches saisie dans le véhicule (50).

13. Procédé de fonctionnement pour un appareil de commande (1) selon l'une quelconque des revendications 10 à 12, **caractérisé en ce qu'**une situation d'entraînement instantanée est déterminée dans le mode de diagnostic (DM) lors du démarrage des roues de véhicule (51) en analysant des vitesses de roue associées et les signaux de commande (30.3, 30.4) sont adaptés de manière correspondante pour l'au moins une fonctionnalité de véhicule (40), dans lequel un entraînement de roues arrière, un entraînement de roues avant ou un entraînement de quatre roues motrices du côté roulement ou du côté véhicule sont différenciés.
